# EUROPÄISCHE PATENTSCHRIFT

(11) **EP 3 136 031 B1**
(45) Veröffentlichungstag und Bekanntmachung des Hinweises auf die Patenterteilung: **17.04.2019**
(21) Anmeldenummer: 16178380.8
(22) Anmeldetag: 07.07.2016
(51) Int. Cl.: F26B 5/06, B65G 65/00, F26B 25/00, F26B 25/12

(54) **GEFRIERTROCKNUNGSANLAGE UMFASSEND EINE ÜBERGABEEINHEIT**
FREEZE DRYING ASSEMBLY COMPRISING A TRANSFER UNIT
INSTALLATION DE LYOPHILISATION COMPRENANT UNE UNITÉ DE TRANSFERT

(30) Priorität: 03.08.2015 DE 102015009866
(43) Veröffentlichungstag der Anmeldung: 01.03.2017
(73) Patentinhaber: ACCURRO GmbH, 35041 Marburg (DE)
(72) Erfinder: WAGNER, Alexander, 35102 Lohra (DE); BATTENBERG, Ralf, 35037 Marburg (DE)
(74) Vertreter: Patentanwälte Walther Hinz Bayer PartGmbB

(56) Entgegenhaltungen:
- WO-A1-2013/098834
- CN-U- 204 279 881
- DE-A1- 19 823 167
- FR-A1- 2 780 148
- JP-A- H10 977
- US-A- 5 129 162
- US-A1- 2010 154 242

## Beschreibung

Die vorliegende Erfindung betrifft eine Übergabeeinheit zum Schaffen einer Transportverbindung zwischen einer Gefriergutzuführanlage und einer Gefriertrocknungsanlage gemäß dem Oberbegriff des Anspruches 1.

Zum Beispiel aus der EP 0 773 418 A1, der US5129162 A, der WO2013098834 A1 oder der FR 2 780 148 A1 ist eine Gefriertrocknungsanlage mit einer Druckkammer und einer Anzahl darin angeordneter Stellplatten zur Aufnahme des Gefriergutes bekannt. Zum Transport des Gefriergutes auf die Stellplatten oder von den Stellplatten ist in einer Wand der Druck-kammer eine Beschickungsöffnung ausgebildet, welche mit einem Türblatt verschließbar ist. Zum Transport des Gefriergutes wird bei geöffnetem Türblatt eine Beladebrücke einer Gefriergutzuführ-anlage durch die Beschickungsöffnung hindurch bis an die Stellplatte geführt, um eine durchgehende Transportfläche zu schaffen, auf der das in Transportbehältern befindliche Gefriergut von einem Übergabetisch der Gefriertrocknungsanlage über die Beladebrücke bis auf die Stellplatte zu schieben, bzw. von der Stellplatte ausgehend herauszuziehen.

Bei dem Gefriergut handelt es sich um pharmazeutische Erzeugnisse, die hohen Hygieneanforderungen unterliegen, weshalb die Gefriergutzuführanlage so lange unter Reinraumbedingungen betrieben werden muss, bis das Gefriergut vorschriftsmäßig verpackt ist. Hierzu wird das Gefriergut während der Be- und Entladephasen mit einem reinen Fluid, zum Beispiel reiner Luft, Stickstoff oder einem anderen Gas überströmt.

Außerdem wird das Innere der Druckkammer mit reinen Fluid, zum Beispiel reiner Luft, Stickstoff oder einem anderen Gas so stark beaufschlagt, dass an der Beschickungsöffnung ein vorgegebener Volumenstrom aus der Druckkammer austritt, um die Hygienevorschriften zu erfüllen.

Bei manchen Gefriergutzuführanlagen ist die Beladebrücke schwenkbar angeordnet und kann nach dem Öffnen der Beschickungsöffnung in diese hineingeschwenkt werden, um an der Stellplatte zur Anlage zu kommen. Damit diese Schwenkbewegung ausgeführt werden kann, muss die Beschickungsöffnung entsprechend hoch ausgeführt sein mit der Folge, dass eine große Menge Fluid erforderlich ist, um an der Beschickungsöffnung die Hygienevorschriften zu erfüllen. Außerdem muss das Türblatt entsprechend stabil ausgelegt werden, um in geschlossenem Zustand den in der Druckkammer auftretenden Drücken standzuhalten.

Bei anderen Gefriertrocknungsanlagen ist die Beladebrücke horizontal ausgerichtet und wird direkt durch die Beschickungsöffnung bis an die Stellplatte bewegt. In diesem Fall kann die Beschickungsöffnung niedriger, also kleiner ausgeführt werden, sodass auch das Türblatt sehr viel kleiner ausgeführt werden kann. Allerdings ist der Reinraum entsprechend groß anzulegen mit der Folge, dass hier mehr Fluid zur Sicherstellung der Reinraumbedingungen erforderlich ist. Außerdem erhöht sich hierdurch der Platzbedarf.

Davon ausgehend liegt der vorliegenden Erfindung die Aufgabe zugrunde, eine Übergabeeinheit der eingangs genannten Art zu schaffen, so dass die Gefriertrocknungsanlage mit einer kleinen Beschickungsöffnung auskommt und so dass die Gefriergutzuführanlage kompakt ausgeführt werden kann.

Als technische Lösung dieser Aufgabe wird erfindungsgemäß eine Übergabeeinheit der eingangs genannten Art mit den Merkmalen des Anspruches 1 vorgeschlagen. Vorteilhafte Weiterbildungen dieser Übergabeeinheit sind den Unteransprüchen zu entnehmen.

Eine nach dieser technischen Lehre ausgebildete Übergabeeinheit hat den Vorteil, dass die Beladebrücke von der Gefriergutzuführanlage entkoppelt ist, mit der Folge, dass die Gefriergutzuführanlage entsprechend kleiner ausgeführt werden kann. Hierdurch ist der Platzbedarf vor der Gefriertrocknungsanlage entsprechend kleiner. Ein weiterer Vorteil besteht darin, dass der Aufwand zur Einhaltung der Hygienevorschriften entsprechend reduziert werdne kann, insbsondere dass weniger Fluid benötigt wird.

Durch die bewegbare Anbringung der Beladebrücke direkt am Türblatt kann diese beim Bewegen des Türblattes teilweise durch die Beschickungsöffnung hindurch bis an die Stellplatte bewegt werden. Hierbei handelt es sich um eine Horizontalbewegung mit der Folge, dass die Beschickungsöffnung deutlich kleiner ausgeführt werden kann. Eine kleine Beschickungsöffnung hat den Vorteil, dass weniger Fluid zur Einhaltung der Hygienevorschriften benötigt wird, was die Betriebskosten der Gefriertrocknungsanlage deutlich reduziert. Auch kann hierbei das Türblatt entsprechend kleiner und damin kostengünstiger ausgelegt.

In einer bevorzugten Ausführungsform wird das Türblatt über ein neben dem Türblatt angeordnetes Führungselement geführt. Dabei kann beispielsweise in dem Führungselement ein entsprechend der Bewegungsgeometrie ausgebildeter Führungsschlitz vorgesehen sein, in den ein an der Beladebrücke befestigter Stift eingreift. Hierdurch folgt die Beladebrücke im Verlauf des Führungsschlitzes und wird von ihrer Ruheposition außerhalb der Gefriertrocknungsanlage beim Bewegen des Türblattes teilweise durch die Beschickungsöffnung hindurch bis zur Stellplatte geführt und beim Schließen des Türblattes wird die Beladebrücke entsprechend wieder in ihre Ausgangsposition zurückgeführt.

In einer bevorzugten Weiterbildung ist an der Beladebrücke mindestens ein, vorzugsweise vier, Linearlager angebracht während am Türblatt mindestens eine, vorzugsweise zwei, Führungswellen angebracht sind und wobei das Linearlager an der Führungswelle gehalten ist, sodass die Beladebrücke quer zum Türblatt verschiebbar ist. Hierdurch ist es in einfacher Weise möglich, die Beladebrücke von ihrer Ausgangsposition außerhalb der Gefriertrocknungsanlage horizontal durch die Beschickungsöffnung hindurch bis an die Stellplatte zu bewegen.

In einer besonders bevorzugten Ausführungsform ist an der Stellplatte mindestens ein Anschlag zur Anlage der Beladebrücke vorgesehen. In ihrer endgültigen Position kommt dann die Beladebrücke auf diesem Anschlag zur Anlage. Dabei ist der Anschlag so ausgelegt, dass die Oberseite der Beladebrücke auf der Oberseite der Stellplatte fluchtet, sodass beim Transport des Gefrierguts keine störende Kante verbleibt.

In einer vorteilhaften Weiterbildung umfasst der Anschlag eine Scheibe, welche mit einer exzentrisch angebrachten Schraube an einer Seitenfläche der Stellplatte gehalten ist. Durch die exzentrische Anordnung der Schraube kann die Scheibe so ausgerichtet werden, dass der Abstand der Oberkante der Scheibe zur Oberkante der Stellplatte exakt der Dicke der Beladebrücke entspricht, sodass beim Aufliegen der Beladebrücke am Anschlag ein sanfter Übergang von der Beladebrücke auf die Stellplatte erreicht wird.

Der hier beschriebene Anschlag wird in analoger Weise auch an der Gefriergutzuführanlage angebracht, um auch dort einen sanften Übergang von der Gefriergutzuführanlage auf die Beladebrücke zu erreichen.

In einer bevorzugten Ausführungsform ist die Beladebrücke aus einem federelastischen Material gebildet, vorzugsweise aus einem Edelstahlblech, mit einer Dicke von 2 mm. Eine solche Beladebrücke kann an einem an der Stellplatte vorgesehenen Anschlag aufgelegt und derart gehalten werden, dass die Beladebrücke unter Spannung steht. Dies kann dadurch erreicht werden, dass das Türblatt 1 bis 5 mm weiter bewegt wird, als eigentlich erforderlich. Eine derart vorgespannte Beladebrücke wird aufgrund der federelastischen Eigenschaften des Materials zuverlässig gegen den Anschlag gedrückt und gewährleistet somit einen exakten und auch vibrationsfreien Sitz an der Stellplatte, sodass das Gefriergut störungsfrei von der Beladebrücke auf die Stellplatte gelangen kann.

In einer alternativen Ausführungsform ist zwischen dem Türblatt und der Beladebrücke mindestens ein Federelement vorgesehen, sodass die Beladebrücke federnd am Türblatt behalten ist. Dies hat den Vorteil, dass die Beladebrücke an der Stellplatte an einem Anschlag anliegt und durch die vorgespannte Feder zuverlässig in dieser Position gehalten wird. Eine derart vorgespannte Beladebrücke wird aufgrund der Feder zuverlässig gegen den Anschlag gedrückt und gewährleistet somit einen exakten und auch vibrationsfreien Sitz an der Stellplatte, sodass das Gefriergut störungsfrei von der Beladebrücke auf die Stellplatte gelangen kann.

In einer anderen Ausführungsform ist es möglich, die Beladebrücke aus einem federelastischen Material mit dem Federelement zwischen der Beladebrücke und dem Türblatt zu kombinieren, um eine erhöhte Federwirkung zu erzeugen.

Je nach Anwendungsfall kann die Beladebrücke oberhalb oder unterhalb des Türblattes angebracht sein.

Weitere Vorteile der erfindungsgemäßen Gefriertrocknungsanlage ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine Frontansicht in schematischer Darstellung einer ersten Ausführungsform eines Teiles einer erfindungsgemäßen Gefriertrocknungsanlage mit geschlossener Beschickungsöffnung;
- Fig. 1a: eine Detailvergrößerung entlang Linie Ia in Fig. 1;
- Fig. 2: eine schematische Darstellung einer Draufsicht auf einen Teil der Gefriertrocknungsanlage gemäß Fig. 1;
- Fig. 3: eine schematische Schnittdarstellung einer Seitenansicht der Gefriertrocknungsanlage gemäß Fig. 1, geschnitten entlang Linie III - III in Fig. 2 bei verschlossener Beschickungsöffnung;
- Fig. 3a: eine Detailvergrößerung entlang Linie IIIa in Fig. 3;
- Fig. 4: eine schematische Schnittdarstellung einer Seitenansicht der Gefriertrocknungsanlage gemäß Fig. 3, bei teilweise geöffneter Beschickungsöffnung;
- Fig. 5: eine schematische Schnittdarstellung einer Seitenansicht der Gefriertrocknungsanlage gemäß Fig. 3, bei vollständig geöffneter Beschickungsöffnung und mit einem Teil einer vor der Gefriertrocknungsanlage angeordneten Gefriergutzuführanlage in schematischer Darstellung;
- Fig. 5a: eine Detailvergrößerung entlang Linie Va in Fig. 5;
- Fig. 6: eine schematische Schnittdarstellung einer Seitenansicht der Gefriertrocknungsanlage gemäß Fig. 3 bei vollständig geöffneter Beschickungsöffnung und mit einem Teil einer vor der Gefriertrocknungsanlage angeordneten Gefriergutzuführanlage in schematischer Darstellung während dem Transport von mit Gerfiergut gefüllten Vials;
- Fig. 7: eine Frontansicht einer schematischen Darstellung einer zweiten Ausführungsform einer erfindungsgemäßen Gefriertrocknungsanlage mit geschlossener Beschickungsöffnung;
- Fig. 7a: eine Detailvergrößerung entlang Linie Vlla in Fig. 7;
- Fig. 8: eine schematische Darstellung einer Draufsicht auf einen Teil der Gefriertrocknungsanlage gemäß Fig. 7;
- Fig. 9: eine schematische Schnittdarstellung einer Seitenansicht der Gefriertrocknungsanlage gemäß Fig. 7, geschnitten entlang Linie IX - IX in Fig. 8 bei verschlossener Beschickungsöffnung;
- Fig. 9a: eine Detailvergrößerung entlang Linie IXa in Fig. 9;
- Fig. 10: eine schematische Schnittdarstellung einer Seitenansicht der Gefriertrocknungsanlage gemäß Fig. 9, bei teilweise geöffneter Beschickungsöffnung;
- Fig. 11: eine schematische Schnittdarstellung einer Seitenansicht der Gefriertrocknungsanlage gemäß Fig. 9 bei vollständig geöffneter Beschickungsöffnung und mit einem Teil einer vor der Gefriertrocknungsanlage angeordneten Gefriergutzuführanlage in schematischer Darstellung;
- Fig. 11a: eine Detailvergrößerung entlang Linie XIa in Fig. 11;
- Fig. 12: eine schematische Schnittdarstellung einer Seitenansicht der Gefriertrocknungsanlage gemäß Fig. 9 bei vollständig geöffneter Beschickungsöffnung und mit einem Teil einer vor der Gefriertrocknungsanlage angeordneten Gefriergutzuführanlage in schematischer Darstellung während dem Transport von mit Gerfiergut gefüllten Vials.

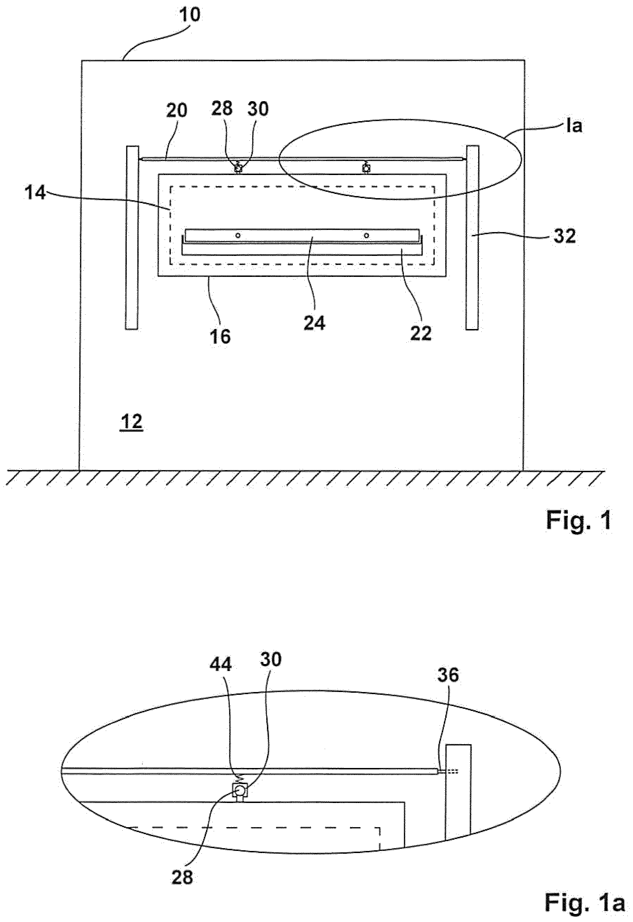

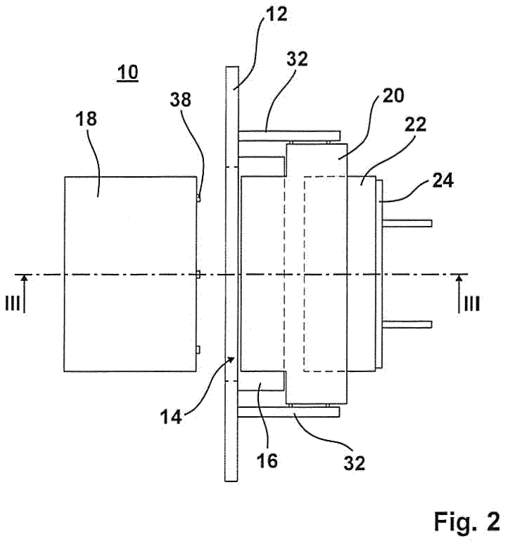

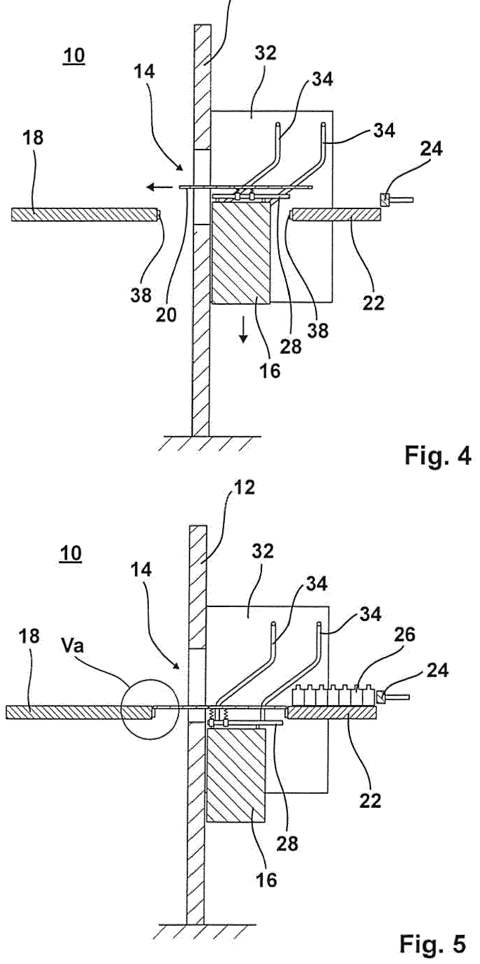

In den Figuren 1 bis 6 ist eine erste Ausführungsform einer erfindungsgemäßen Gefriertrocknungsanlage dargestellt. Diese Gefriertrocknungsanlage umfasst eine Druckkammer 10, an deren vorderseitiger Wand 12 eine Beschickungsöffnung 14 vorgesehen ist, welche über ein an der Wand 12 gehaltenes Türblatt 16 verschlossen werden kann. Innerhalb der Druckkammer 10 ist mindestens eine Stellplatte 18 zur Aufnahme von hier nicht näher dargestelltem Gefriergut vorgesehen. Diese Stellplatte 18 befindet sich auf Höhe der Beschickungsöffnung 14 und korrespondiert mit einer hier nicht näher dargestellten Gefriergutzuführanlage, welche vor der Gefriertrocknungsanlage angeordnet ist.

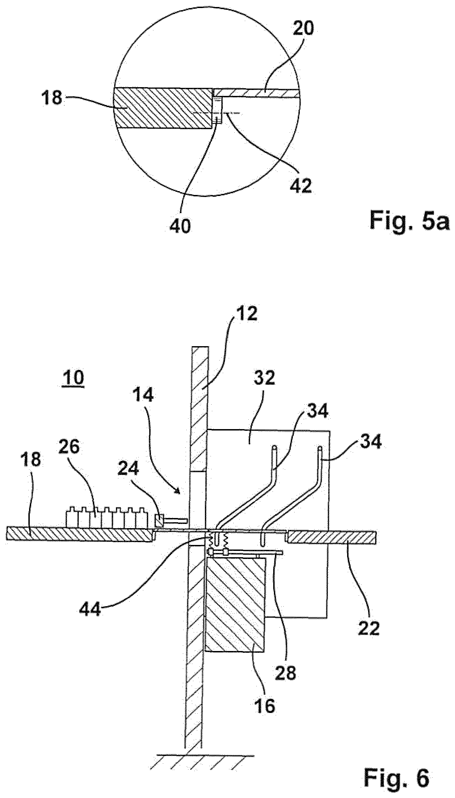

An einer Oberseite des Türblattes 16 ist eine Beladebrücke 20 gehalten, welche während der Beladung der Gefriertrocknungsanlage mit Gefriergut bündig zwischen der Stellplatte 18 und einem Übergabetisch 22 der Gefriergutzuführanlage angeordnet ist, wie dies in Fig. 6 dargestellt ist. In dieser Position kann dann ein zur Gefriergutzuführanlage gehörende Schieber 24 eine Anzahl von mit Gefriergut gefülltem Vials 26 vom Übergabetisch 22 über die Beladebrücke 20 auf die Stellplatte 18 schieben.

An einer Oberseite des Türblattes 16 sind zwei Führungswellen 28 in Form je einer Stange angebracht, welche quer zum Türblatt 16 ausgerichtet sind. An einer Unterseite der Beladebrücke 20 sind korrespondierend zu den Führungswellen 28 zwei Linearlager 30 angebracht, wobei die Linearlager 30 derart an den Führungswellen 28 gehalten sind, sodass die Beladebrücke 20 quer zum Türblatt 16 verschiebbar ist.

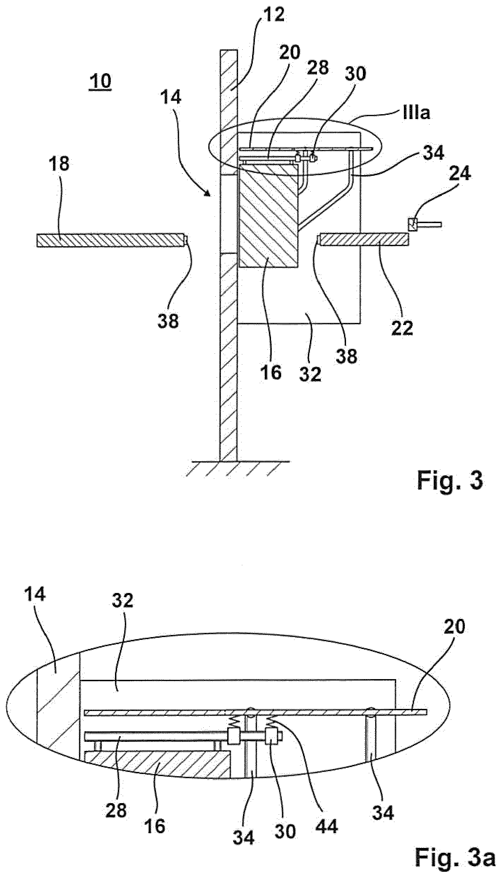

Rechts und links neben dem Türblatt 16 ist je ein vertikal ausgerichtetes Führungselement 32 angebracht, wobei in jedem Führungselement 32 zwei parallel angeordnete Führungsschlitze 34 vorgesehen sind, in die je ein an der Beladebrücke 20 befestigter Stift 36 hineinragt. Dabei ist der Führungsschlitz 34 derart geschwungen ausgerichtet, dass die Beladebrücke beim Herunterfahren des Türblattes 16 von einer Ausgangsposition außerhalb der Gefriertrocknungsanlage teilweise in die Beschickungsöffnung 14 hindurchgeführt und bis an die Stellplatte 18 herangeführt wird, sodass in der Endstellung die Beladebrücke 20 eine Verbindung zwischen der Stellplatte 18 und dem Übergabetisch 22 der Gefriergutzuführanlage herstellt, wie dies in den Figuren 3 bis 6 schematisch dargestellt ist. In dieser Endstellung kann dann ein Schieber 24 die mit Gefriergut gefüllten Vials 26 von dem Übergabetisch 22 über die Beladebrücke 20 bis zur Stellplatte 18 schieben oder in umgekehrter Richtung die Stellplatte 18 entsprechend entladen.

Zum Verschließen der Beschickungsöffnung 14 wird das Türblatt 16 nach oben bewegt, wobei die Beladebrücke 20 aus ihrer Endstellung heraus mittels der Führungsschlitze 34 durch die Beschickungsöffnung 14 nach außerhalb der Gefriertrocknungsanlage bewegt wird, sodass die Beladebrücke 20 bei geschlossenem Türblatt 16 vollständig außerhalb der Gefriertrocknungsanlage angeordnet ist.

Damit die Beladebrücke 20 während dem Be- und Entladen der Stellplatte 18 präzise, zuverlässig und vibrationsarm an der Stellplatte 18 anliegt, sind an der Stellplatte 18 drei Anschläge 38 vorgesehen. Jeder Anschlag 38 umfasst eine kreisrunde Scheibe 40, welche mit einer exentrisch angebrachten Schraube 42 an einer Seitenwand der Stellplatte 18 angeschraubt ist. Aufgrund der exzentrischen Anbringung der Scheibe 40 kann hiermit der Abstand zwischen einer Oberkante der Scheibe 40 und einer Oberkante der Stellplatte 18 so eingestellt werden, dass die auf der Scheibe 40 aufliegende Beladebrücke 20 mit ihrer Oberkante exakt mit der Oberkante der Stellplatte 18 fluchtet, sodass ein kantenfreier Übergang erreicht wird. Solche Anschläge 38 ist auch am Übergabetisch 22 vorgesehen, um auch hier einen zuverlässigen, präzisen und vibrationsarmen Übergang von der Beladebrücke 20 auf den Übergabetisch 22 zu erreichen.

In der hier dargestellten Ausführungsform ist die Beladebrücke 20 aus einem 2 mm Edelstahlblech gebildet, sodass die Beladebrücke 20 federelastische Eigenschaften aufweist. Darüber hinaus ist zwischen jedem Linearlager 30 und der Beladebrücke 20 ein Federelement 44 vorgesehen, sodass die Beladebrücke 20 federnd am Türblatt 16 gehalten ist. Ist nun die Beladebrücke 20 in ihrer Endstellung, wobei das Türblatt 16 die Beschickungsöffnung 14 entsprechend freigibt, so kann das Türblatt 16 um weitere 1 mm bis 5 mm, vorzugsweise 2 mm abgesenkt werden, um sowohl das Federelement 44, als auch die federelastische Beladebrücke 20 zu spannen. In dieser Position übt das Federelement 44 genauso wie die vorgespannte Beladebrücke 20 eine Federkraft auf die Beladebrücke 20 aus und hält somit die Beladebrücke 20 zuverlässig und vibrationsarm am Anschlag 38, sodass beim Be- oder Entladen der Stellplatte 18 das in den Vials 26 befindliche Gefriergut die Übergänge zwischen der Stellplatte 18 und der Beladebrücke 20 einerseits bzw. der Beladebrücke 20 und dem Übergabetisch 22 störungsfrei passieren kann.

In einer anderen, hier nicht dargestellten Ausführungsform, wird auf das Federelement verzichtet, sodass lediglich die federelastischen Materialeigenschaften der Beladebrücke die hier gewünschte Federkraft ausüben.

In noch einer anderen, hier nicht dargestellten Ausführungsform ist die Beladebrücke aus einem anderen, nicht ausreichend federelastischem Material gebildet, während unter der Beladebrücke die Federelemente vorgesehen sind, um eine Vorspannung auf die Beladebrücke auszuüben.

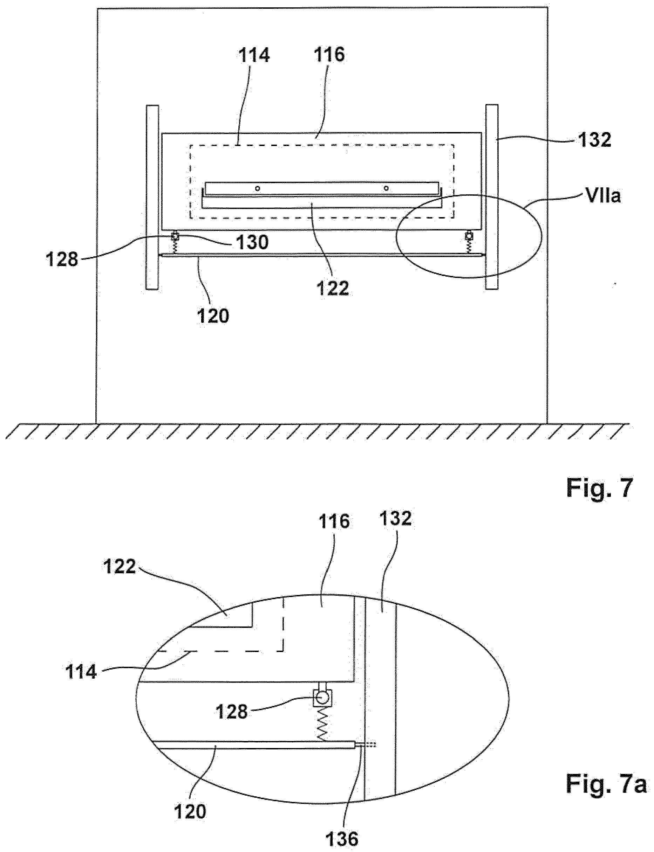

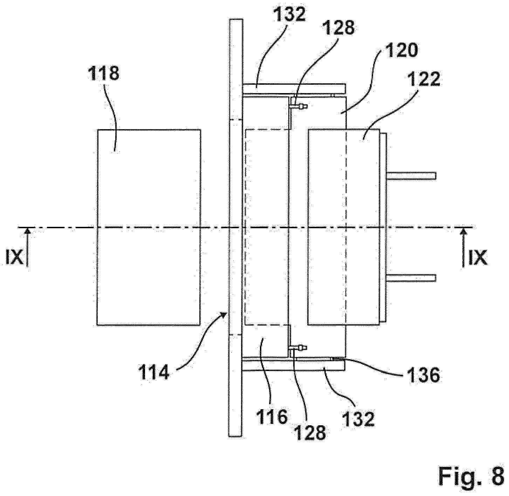

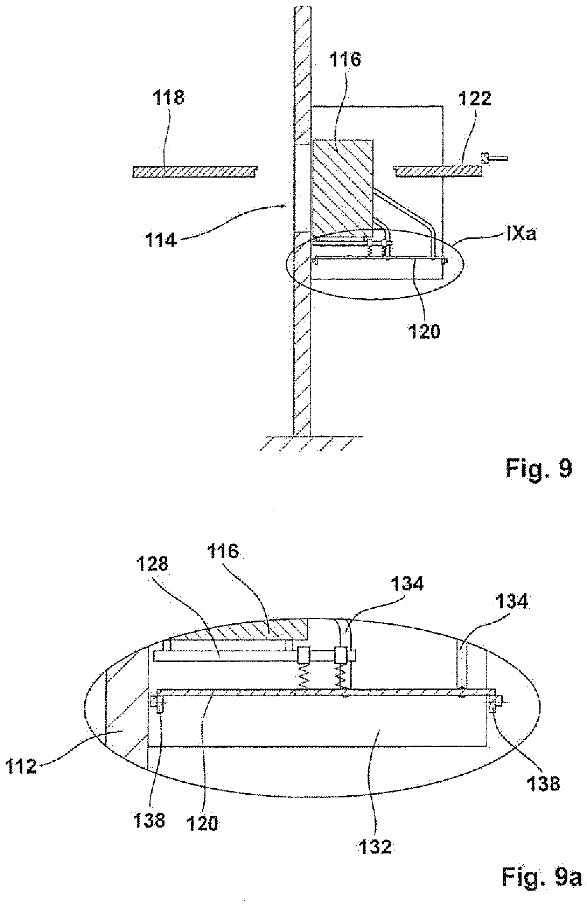

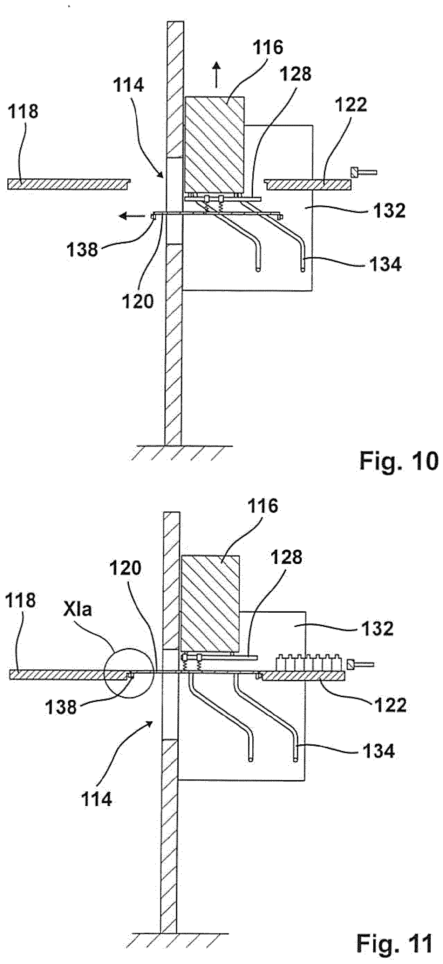

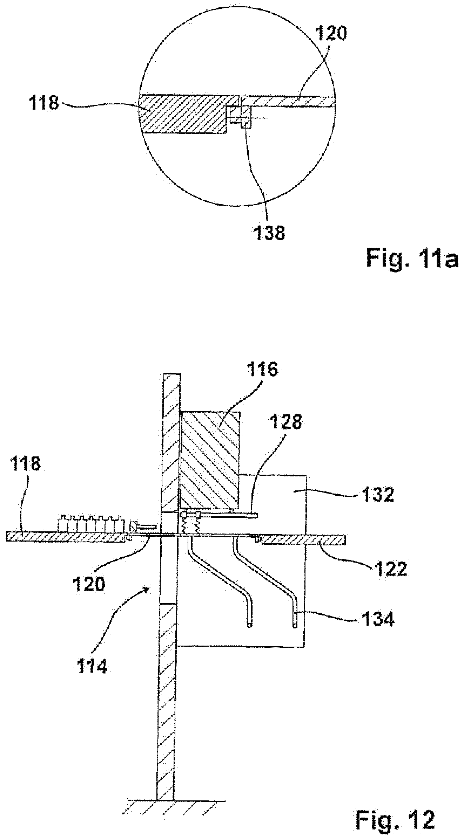

In den Figuren 7 bis 12 ist eine zweite Ausführungsform einer erfindungsgemäßen Gefriertrocknungsanlage abgebildet, bei der eine Beladebrücke 120 an einer Unterseite eines Türblattes 116 gehalten ist. Dabei ist das Türblatt 116 breiter ausgeführt als bei der ersten Ausführungsform, sodass die Führungswellen 128 rechts und links neben der Beschickungsöffnung 114 angeordnet sind. Im Übrigen ist diese zweite Ausführungsform analog zu der in den Figuren 1 bis 6 beschriebenen ersten Ausführungsform ausgebildet und besitzt ebenfalls rechts und links neben dem Türblatt 116 vorgesehene Führungselemente 132, in deren Führungsschlitz 134 an der Beladebrücke 120 angebrachte Stifte 136 hineinreichen.

Im Gegensatz zur ersten Ausführungsform sind in der zweiten Ausführungsform die Anschläge 138 an der Beladebrücke 120 angebracht und greifen in nicht näher dargestellte Aussparungen an der Stellplatte 118 bzw. am Übergabetisch 122 ein.

Weitere Einzelheiten zu dieser zweiten Ausführungsform können den Figuren 7 bis 12 entnommen werden.

## Patentansprüche

1. Gefriertrocknungsanlage mit einer Druckkammer (10), mindestens einer in der Druckkammer (10) angeordneten Stellplatte (18, 118) zur Aufnahme von Gefriergut und einer Übergabeeinheit zum Schaffen einer Transportverbindung zwischen der Gefriertrocknungsanlage und einer separaten Gefriergutzuführanlage, wobei die Druckkammer (10) eine Wand (12) und eine in der Wand (12) angeordnete Beschickungsöffnung (14, 114), sowie ein an der Wand (12) gehaltenes Türblatt (16, 116) zum Verschließen der Beschickungsöffnung (14, 114) aufweist, **dadurch gekennzeichnet,**
**dass** am Türblatt (16, 116) eine Beladebrücke (20, 120) vorgesehen ist, wobei die Beladebrücke (20, 120) verschiebbar am Türblatt (16, 116) gehalten ist, wobei die Beladebrücke (20, 120) bei geschlossener Beschickungsöffnung (14, 114) außerhalb der Druckkammer (10) angeordnet ist und wobei die Beladebrücke (20, 120) teilweise durch die Beschickungsöffnung (14, 114) hindurch bis an die Stellplatte (18, 118) verschiebbar ist und in dieser Position eine Transportverbindung zwischen der Stellplatte (18, 118) und einem Übergabetisch (22, 122) der Gefriergutzuführanlage schafft, so dass Gefriergut durch die Beschickungsöffnung (14, 114) bis zur Stellplatte (18, 118) transportiert werden kann.

2. Gefriertrocknungsanlage nach Anspruch 1,
**dadurch gekennzeichnet,**
**dass** die Beladebrücke (20, 120) über mindestens ein neben dem Türblatt (16, 116) angeordnetes Führungselement (32, 132) geführt wird.

3. Gefriertrocknungsanlage nach Anspruch 2,
**dadurch gekennzeichnet,**
**dass** das Führungselement (32, 132) einen Führungsschlitz (34, 134) aufweist, in den ein an der Beladebrücke (20, 120) befestigter Stift (36, 136) eingreift, um die Beladebrücke (20, 120) entsprechend des Verlaufes des Führungsschlitzes (34, 134) zu bewegen.

4. Gefriertrocknungsanlage nach einem der vorangehenden Ansprüche,
**dadurch gekennzeichnet,**
**dass** an der Beladebrücke (20, 120) mindestens ein Linearlager (30) angebracht ist, welches in eine am Türblatt (16, 116) angebrachte Führungswelle (28, 128) derart eingreift, dass die Beladebrücke (20, 120) quer zum Türblatt (16, 116) verschiebbar ist.

5. Gefriertrocknungsanlage nach einem der vorangehenden Ansprüche,
**dadurch gekennzeichnet,**
**dass** an der Stellplatte (18, 118) mindestens ein Anschlag (38, 138) zur Anlage der Beladebrücke (20, 120) derart vorgesehen ist, dass eine Oberseite der Beladebrücke (20, 120) mit einer Oberseite der Stellplatte (18, 118) fluchtet.

6. Gefriertrocknungsanlage nach Anspruch 5,
**dadurch gekennzeichnet,**
**dass** der Anschlag (38, 138) eine Scheibe (40) umfasst, die mit einer exzentrisch angebrachten Schraube (42) an einer Seitenfläche der Stellplatte (18) oder der Beladebrücke (120) gehalten ist.

7. Gefriertrocknungsanlage nach einem der vorangehenden Ansprüche,
**dadurch gekennzeichnet,**
**dass** die Beladebrücke (20, 120) aus einem federelastischen Material gebildet ist, insbesondere aus einem Edelstahlblech mit einer Dicke zwischen 1 mm und 3 mm, vorzugsweise 2 mm.

8. Gefriertrocknungsanlage nach einem der vorangehenden Ansprüche,
**dadurch gekennzeichnet,**
**dass** zwischen dem Türblatt (16, 116) und der Beladebrücke (20, 120) mindestens ein Federelement (44) vorgesehen ist, sodass die Beladebrücke (20, 120) federnd am Türblatt (16, 116) gehalten ist.

9. Gefriertrocknungsanlage nach einem der vorangehenden Ansprüche,
**dadurch gekennzeichnet,**
**dass** die Beladebrücke (20, 120) an einer Oberseite oder an einer Unterseite des Türblattes (16, 116) gehalten ist.

## Claims

1. A freeze drying device with a pressure chamber (10), at least one adjusting plate (18, 118) arranged in the pressure chamber (10) for receiving frozen goods, and a transfer unit for creating a transport connection between the freeze drying device and a separate frozen goods feed system, wherein the pressure chamber (10) comprises a wall (12) and a feed opening (14, 114) located in the wall (12) as well as door leaf (16, 116) supported on the wall (12) for closing the feed opening (14, 114),
**characterised in**
**that** a loading platform (20, 120) is provided on the door leaf (16, 116), wherein the loading platform (20, 120) is supported displaceable on the door leaf (16, 116), wherein the loading platform (20, 120) is located outside the pressure chamber (10) at closed feed opening (14, 114), and wherein the loading platform (20, 120) is partly displaceable through the feed opening (14, 114) up to the adjusting plate (18, 118), and in this position creates a transport connection between the adjusting plate (18, 118) and a transfer table (22, 122) of the frozen goods feed system so that the frozen goods can be transported through the feed opening (14, 114) up to the adjusting plate (18, 118).

2. The freeze drying device according to claim 1,
**characterised in**
**that** the loading platform (20, 120) is lead via at least one guide element (32, 132) arranged next to the door leaf (16, 116).

3. The freeze drying device according to claim 2,
**characterised in**
the guide element (32, 132) comprises a guide slot (34, 134) in which a pin (36, 136) fastened to the loading platform (20, 120) engages in order to move the loading platform (20, 120) according to the course of the guide slot (34, 134).

4. The freeze drying device according to any one of the preceding claims,
**characterised in**
**that** at least one linear bearing (30) is mounted on the loading platform (20, 120), which engages in a guide shaft (28,128) attached on the door leaf (16, 116) in such a way that the loading platform (20, 120) is displaceable transversely to the door leaf (16, 116).

5. The freeze drying device according to any one of the preceding claims,
**characterised in**
**that** on the adjusting plate (18, 118) at least one stop (38, 138) for abutment of the loading platform (20, 120) is provided such that an upper side of the loading platform (20, 120) is flush with an upper side of the adjusting plate (18, 118).

6. The freeze drying device according to claim 5,
**characterised in**
the stop (38, 138) comprises a disk (40) which is held by means of an eccentrically mounted screw (42) on a lateral surface of the adjusting plate (18) oder the loading platform (120).

7. The freeze drying device according to any one of the preceding claims,
**characterised in**
**that** the loading platform (20, 120) is formed of a resilient material, in particular of a stainless steel sheet with a thickness between 1 mm and 3 mm, preferably 2 mm.

8. The freeze drying device according to any one of the preceding claims,
**characterised in**
**that** between the door leaf (16, 116) and the loading platform (20, 120) at least one spring element (44) is provided so that the loading platform (20, 120) is resiliently held on the door leaf (16, 116).

9. The freeze drying device according to any one of the preceding claims,
**characterised in**
**that** the loading platform (20, 120) is held on an upper side or on an underside of the door leaf (16, 116).

## Revendications

1. Installation de lyophilisation avec une chambre de pression (10), au moins une plaque de réglage (18, 118) agencée dans la chambre de pression (10) pour recevoir des produits congelés, et une unité de transfert pour créer une liaison de transport entre l'installation de lyophilisation et une installation d'alimentation séparée des produits congelés, la chambre de pression (10) comportant une paroi (12) et une ouverture d'alimentation (14, 114) agencée dans la paroi (12) ainsi qu'un vantail de porte (16, 116) maintenu à la paroi (12) pour fermer l'ouverture d'alimentation (14, 114),
**caractérisé en ce**
**qu'**une plate-forme de chargement (20, 120) est prévue au vantail de porte (16, 116), la plate-forme de chargement (20, 120) étant tenue déplaçable au vantail de porte (16, 116), la plate-forme de chargement (20, 120) étant agencée en dehors de la chambre de pression (10) lorsque l'ouverture d'alimentation (14, 114) est fermée, la plate-forme de chargement (20, 120) étant partiellement déplaçable à travers l'ouverture d'alimentation (14, 114) jusqu'à la plaque de réglage (18, 118), et dans cette position créant une liaison de transport entre la plaque de réglage (18, 118) et une table de transfert (22, 122) de l'installation d'alimentation des produits congelés de sorte que les produits congelés peuvent être transportés à travers l'ouverture d'alimentation (14, 114) jusqu'à la plaque de réglage (18, 118).

2. Installation de lyophilisation selon la revendication 1,
**caractérisé en ce**
**que** la plate-forme de chargement (20, 120) est guidée par au moins un élément de guidage (32, 132) agencé à côté du vantail de porte (16, 116).

3. Installation de lyophilisation selon la revendication 2,
**caractérisé en ce**
**que** l'élément de guidage (32, 132) comporte une fente de guidage (34, 134) dans laquelle une cheville (36, 136) fixée à la plate-forme de chargement (20, 120) s'engage pour déplacer la plate-forme de chargement (20, 120) selon l'allure de la fente de guidage (34, 134).

4. Installation de lyophilisation selon l'une quelconque des revendications précédentes,
**caractérisé en ce**
**qu'**au moins un palier linéaire (30) est monté à la plate-forme de chargement (20, 120) qui s'engage dans un arbre de guidage (28, 128) fixé au vantail de porte (16, 116) de sorte que la plate-forme de chargement (20, 120) est déplaçable transversalement au vantail de porte (16, 116).

5. Installation de lyophilisation selon l'une quelconque des revendications précédentes.
**caractérisé en ce**
**qu'**à la plaque de réglage (18, 118) au moins une butée (38, 138) à l'appui de la plate-forme de chargement (20, 120) est prévue de sorte qu'un côté supérieur de la plate-forme de chargement (20, 120) est aligné avec un côté supérieur de la plaque de réglage (18, 118).

6. Installation de lyophilisation selon la revendication 5,
**caractérisé en ce**
**que** la butée (38, 138) comprend un disque (40) qui est maintenu sur une surface latérale de la plaque de réglage (18,) ou de la plate-forme de chargement (120) par une vis (42) montée de façon excentrique.

7. Installation de lyophilisation selon l'une quelconque des revendications précédentes,
**caractérisé en ce**
**que** la plate-forme de chargement (20, 120) est formée d'un matériau élastique, surtout d'une tôle d'acier spécial avec une épaisseur entre 1 mm et 3 mm, de préférence 2 mm.

8. Installation de lyophilisation selon l'une quelconque des revendications précédentes,
**caractérisé en ce**
**qu'**entre le vantail de porte (16, 116) et la plate-forme de chargement (20, 120) au moins un élément ressort (44) est prévu de sorte que la plate-forme de chargement (20, 120) est maintenue élastiquement au vantail de porte (16, 116).

9. Installation de lyophilisation selon l'une quelconque des revendications précédentes,
**caractérisé en ce**
**que** la plate-forme de chargement (20, 120) est maintenue sur un côté supérieur ou sur un côté inférieur du vantail de porte (16, 116).
